Europäisches Patentamt

**European Patent Office**

**Office européen des brevets**

(19)

(11) Publication number: **0 051 961**
**A1**

(12)  # EUROPEAN PATENT APPLICATION

(21) Application number: **81305126.5**

(22) Date of filing: **29.10.81**

(51) Int. Cl.³: **F 16 K 37/00,** H 01 H 36/00

(30) Priority: **10.11.80 US 205338**

(43) Date of publication of application: **19.05.82**
**Bulletin 82/20**

(84) Designated Contracting States: **AT BE CH DE FR GB IT**
**LI LU NL SE**

(71) Applicant: **CROSBY VALVE & GAGE COMPANY,**
**43 Kendrick Street, Wrentham**
**Massachusetts 02093 (US)**

(72) Inventor: **Thompson, Leonard J., 175 Walnut Road,**
**Wrentham Massachusetts 02093 (US)**
Inventor: **Gonyaw, Stephen C., 504 Ware Street,**
**Mansfield Massachusetts 02048 (US)**
Inventor: **Zahorsky, John Richard, 8 Greenwich Road,**
**Norwood Massachusetts 02062 (US)**

(74) Representative: **Hughes, Brian P. et al, Graham Watt &**
**Co. Riverhead, Sevenoaks, Kent TN13 2BN (GB)**

(54) **Apparatus for monitoring a valve.**

(57) A safety valve, coupled to a pressure chamber, includes a closure element which is translatable substantially along a reference axis. The device includes a spindle nut (60) and an associated extension member adapted for coupling to the spindle (14) of the valve. The extension member includes an annular permanent magnet (76) positioned thereon having its principal axis co-linear with the first reference axis (70). This magnet assembly provides a substantially uniform magnetic field at its periphery which is substantially symmetrical about the reference axis. The device further includes a cylindrical housing member (40) which includes a generally cylindrical inner surface which extends about and is uniformly displaced from the magnet assembly (76) for substantially all positions of the magnet assembly as the spindle moves along the reference axis. The cylindrical housing assembly includes one or more reed switches (50, 52) in close proximity to the inner cylindrical surface aligned with their principal axis parallel to the reference axis. The spacing between the magnet assembly and the reed switches is selected so that as the magnet assembly passes one of the reed switches, that reed switch changes from open to closed, and then back to open again.

## APPARATUS FOR MONITORING A VALVE

BACKGROUND OF THE INVENTION

The present invention relates to pressure line instrumentation, and more particularly to valve lift indicating devices for safety valves.

In the prior art, pressure lines, or chambers, are often designed with safety valves located at various positions along their length. The conventional valves, such as the Type HB and Type HB-DF Safety Valves manufactured by Crosby Valve & Gage Company, Wrentham, Massachusetts, include a closure element which is nominally biased against a port in a pressure line, or chamber, to seal the port. Typically, this bias is provided by spring-loaded assembly coupled to the closure element. The safety valve is designed so that when the pressure in the line is below a predetermined threshold, defined as the set pressure, the valve port is sealed. However, when the pressure within the line exceeds the set pressure, the line pressure is sufficient to overcome the spring bias so that the valve lifts from its seating in the valve port and the medium within the pressure line may freely escape. In the prior art, safety valves are designed for specifically desired set pressures for various applications.

One problem in the use of such safety valves is the requirement for detecting times when the closure element lifts off from the seat. There are several approaches known in the art to detect this occurrence. For example, a region above the closure element and valve seat may be filled with the liquid so that when the valve lifts off, the gas within the pressure line provides bubbles which may be detected in the liquid. Alternatively, U.S. Patent No. 3,269,170 discloses a capacitance lift-off detection mechanism whereby motion of the valve stem displaces one of the plates of a parallel plate capacitor so that a capacitance bridge is thrown out of balance. In yet another prior art approach used in valve test situations, an operator may listen for an audible leak (or "pop") which occurs when the closure element lifts off the seat. While the audible "pop" which accompanies the lift of the closure element does provide a fairly reliable method of determining the valve lift off, this approach is not an acceptable test procedure in many applications. For example, there may be a relatively noisy environment where the test operator may not be able to detect the audible "pop".

In all of the above approaches, a test operator is required to be present at the site of the valve to detect the lift off. In many applications, such as in boiling water reactor plants, there are hazardous radiation environments, or alternatively, high level heat or other forms of hostile environments, in which a test operator may not safely enter the immediate region of the valve-to-be-tested.

In the prior art, there have been attempts to utilize the above-described audible "pop" technique with an acoustical transducer so that remote set point testing may be performed for the valve in operational systems. However, these attempts have been unsuccessful, principally due to background noise.

Accordingly, it is an object of the present invention to provide an improved remote valve lift off detection device.

SUMMARY OF THE INVENTION

Briefly, the present invention is a device for monitoring a valve coupled to a port in a pressure line, or pressure chamber, where the valve includes a closure element which is translatable along a reference axis between a first limit position (sealing the port) and a second limit position (opening the port). The device includes a housing member which is affixed with respect to the port. The housing member includes an inner element which defines a cylindrical interior region which is substantially coaxial with the reference axis. One or more reed switches are positioned adjacent to that inner element with their principal $y$ axes (i.e. that is the axis which is generally parallel to their opposing reed conductor portions) being substantially parallel to the reference axis. In various embodiments, the reed switches may be on the interior or exterior of the element defining the cylindrical region.

An extension member includes an annular permanent magnet assembly which generates at its periphery a substantially uniform, radially symmetrical magnetic field extending parallel to the principal axis of that annular magnet assembly. The extension member is adapted for coupling to the closure element so that the magnet assembly has its principal axis substantially coaxial with the reference axis, and further, so that the magnet assembly translates past the reed switches in the direction of the reference axis as the closure element translates between the first and second limit positions.

In various embodiments of the invention, the permanent magnet assembly may be a molded ceramic magnet, or alternatively, may be a composite magnet made up of a plurality of permanent bar magnets supported in a matrix, where the polar axes of the bar magnets are substantially parallel to the principal axis of the assembly.

The magnet assembly may include a pair of relatively high permeability pole pieces. Each of such pole pieces includes a substantially planar portion. The pole pieces each include, in addition, a lip portion at the perimeter of its planar portion, so that the pole pieces generally provide guides for the magnetic field to ensure that the magnetic field at the perimeter of the magnetic assembly is substantially uniform, and radially symmetrical about the principal axis of the magnet assembly.

With this configuration, as the valve closure element, or spindle, translates between its two limit positions, the annular magnet passes one or more of the reed switches. When the magnet is adjacent to a reed switch, the switch contacts are in their closed (i.e. electrically connected) position, and when the magnet is otherwise positioned with respect to the reed switches, the contacts of the switches are open (i.e. electrically isolated).

BRIEF DESCRIPTION OF THE DRAWINGS

An embodiment of the present invention will now be described, by way of example, with reference to the accompanying drawings, in which:-

Fig. 1 shows an exemplary valve lift indicating device in accordance with the present invention connected to a conventional safety valve;

Fig. 2 shows in cross-section the valve lift indicating device of Fig. 1; and

Fig. 3 shows the upper pole piece of the device of Figs. 1 and 2.

DESCRIPTION OF THE PREFERRED EMBODIMENT

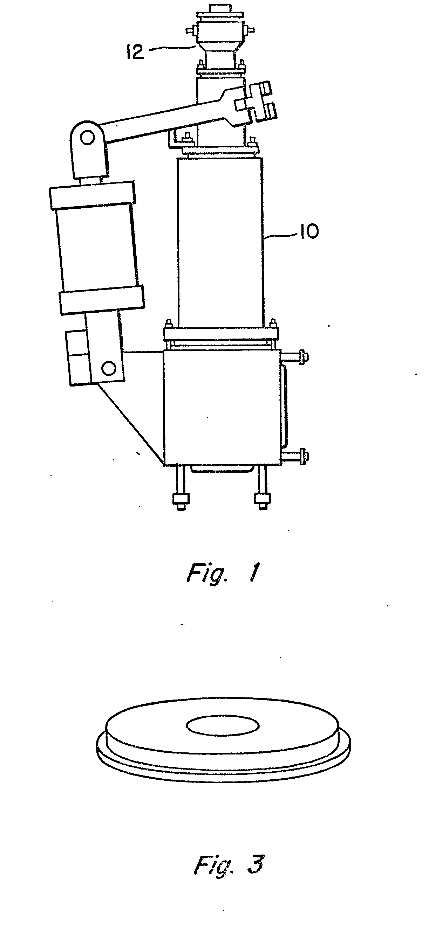

Fig. 1 shows a conventional safety valve, (Crosby style HB-DF safety valve, R orifice) manufactured by Crosby Valve & Gage Company, with a valve monitoring device 12 affixed to the valve cap of the outer housing of the safety valve 10.

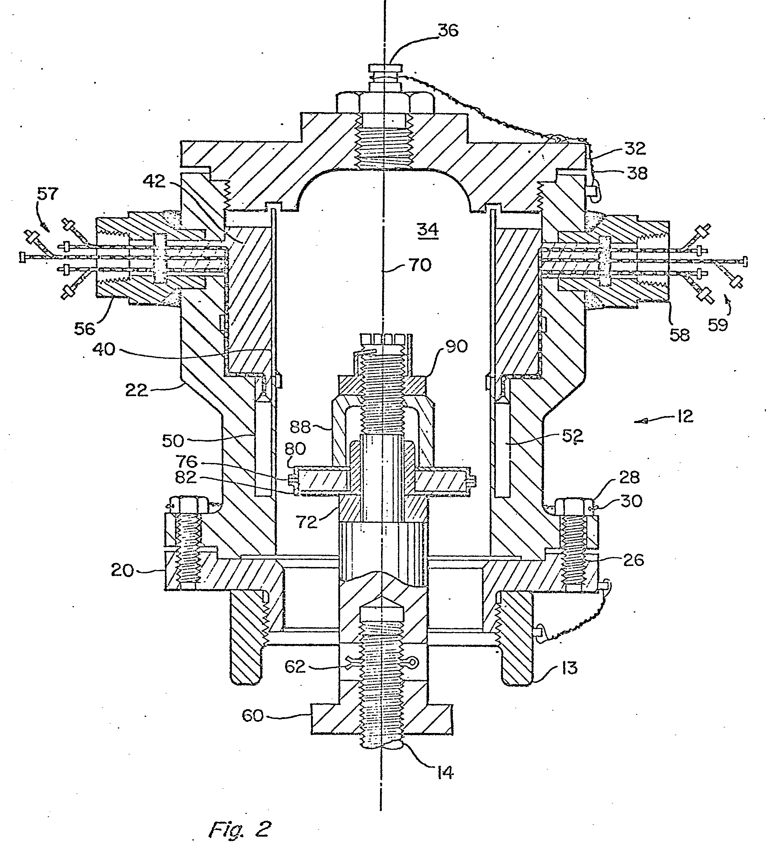

Fig. 2 shows a sectional view of the valve monitoring device 12 as coupled to the spindle 14 of the valve 10. The device 12 includes a valve cap adaptor 20 which is coupled by means of a threaded fitting to the interior portion of the valve cap 13 of valve 10. The device 12 includes an outer housing 22 which is affixed to the cap adaptor 20 by means of switch housing nuts, associated switch housing studs and lock wires (indicated for one side of device 12 by reference numerals 26, 28 and 30, respectively). A switch housing cover 32 is connected by a threaded coupling to the upper portion of housing 22 to establish a closed interior region 34. A cap plug 36 is screw fitted to the top portion of cover 32. The housing plug 36 is connected by way of a lock wire 38 to the housing 22. The housing 22 encloses a stainless steel cylindrical tube 40 which is positioned in place by a resin filler 42.

As described in more detail below, the housing 22 also includes a plurality of reed switches (two of which are indicated by reference numerals 50 and 52 in Fig. 2) which are positioned adjacent to the interior cylindrical surface formed by tube 40 at various positions along that tube. The present embodiment includes three pairs of opposed reed switches at different positions along the central axis of tube 40.

Feed-through electrical connection assemblies 56 and 58 provide channels for guiding groups of electrical leads 57 and 59, respectively, running from the reed switches within housing 22.

A spindle nut 60 is coupled to a threaded connection on the spindle 14 of the valve 10. A cotter pin 62 serves to lock that spindle nut in position with respect to the cotter pin. The spindle nut provides an extension member to the spindle so that extension member translates along axis 70 as the spindle moves along that axis. At the top (as shown) of the spindle nut, a spacer 72 supports a permanent magnet assembly. The permanent magnet assembly in the present embodiment includes an annular permanent magnet 76 having upper and lower annular steel pole pieces 80 and 82, respectively, although in alternate embodiments, the pole pieces may not be utilized. A magnet retaining nut 88 and lock nut 90 holds the magnet assembly in place.

With the present embodiment, the pairs of reed switches positioned along the axis 70 provide redundancy of the lift indicating function. As the spindle 14 translates along axis 70 in response to variations in pressure within the pressure line, the magnet assembly is moved past the respective pairs of reed switches. As the magnet passes a switch pair, the contacts of the switches go from open, to closed, and back to open again. These indications may be detected by external sensing instrumentation coupled to the wires 57 and 59 going through feed-through assemblies 56 and 58, respectively. With the three pairs of reed switches, the embodiment may provide indications when the valve is closed, at midpoint, and open.

Fig. 3 shows the upper pole piece 80 of the device 12 illustrated in Fig. 2. This pole piece generally provides an upper cap shaped member having a substantially planar upper portion, coupled to a peripheral lip portion. The bottom pole piece 82 is substantially similar but includes a central guide portion which is adapted for extending along the extension member portion of spindle nut 60. In operation, the pole pieces 80 and 82 constrain to field from the permanent magnet 76 to the dipole-like and extend uniformly and symmetrically about the axis 70. In alternate configurations, the pole pieces may not be necessary, depending on the precise structure of the permanent magnet 76. In one form, the permanent magnet 76 may be a ceramic permanent magnet. Alternately, the magnet 76 may include a plurality of bar permanent magnets in a matrix, with their polar axes parallel to axis 70. However, the latter form is not preferred, since in operation, the spindle 14 may rotate, and the alignment of the various bar magnets within this magnet assembly may provide non-uniformity about the axis 70 which will affect the sensitivity of the switching operation provided by the reed switches.

The invention may be embodied in other specific forms without departing from the essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

CLAIMS:

1.  Apparatus for monitoring a valve coupled to a port in a pressure line, wherein said valve includes a closure element translatable along a reference axis between a first limit position sealing said port and a second limit position opening said port, the apparatus being characterised by a housing member (22) and associated means (20, 26) for affixing said housing member with respect to said port, said housing member including an inner element (40) defining a cylindrical region substantially coaxial with said reference axis (70), one or more reed switches (50, 52) and associated means for positioning said reed switches adjacent to said inner element (40) and having their principal axes substantially parallel to said reference axis (70), an extension member (60) including an annular permanent magnet assembly (76) attached thereto, said magnet assembly including means for generating at its periphery a substantially uniform, radially symmetrical magnetic field extending parallel to its principal axis, and means (14) for coupling said extension member (60) to said closure element whereby said magnet assembly has its principal axis substantially coaxial with said reference axis (70) and whereby said magnet assembly translates past said reed switches in the direction of said reference axis as said closure element translates between said first and second limit positions.

2.    Apparatus as claimed in claim 1, characterised in that said permanent magnet assembly (76) is a molded ceramic magnet.

3.    Apparatus as claimed in claim 1, characterised in that said permanent magnet assembly (76) includes a composite magnet including a plurality of permanent bar magnets supported in a matrix wherein the polar axes of the bar magnets are substantially parallel to the principal axis (70) of said assembly.

4.    Apparatus as claimed in claim 2 or claim 3, characterised in that said magnet assembly (76) includes a pair of relatively high permeability pole pieces (80, 82), said pole pieces each including a substantially planar portion positioned perpendicular to said magnet assembly principal axis and adjacent to an associated surface of said magnet, and said pole pieces each further including a lip portion at the perimeter of its planar portion.

Fig. 1

Fig. 3

0051961

Fig. 2

European Patent Office

### DOCUMENTS CONSIDERED TO BE RELEVANT

| Category | Citation of document with indication, where appropriate, of relevant passages | Relevant to claim |
|---|---|---|
| X | US - A - 3 896 280 (D.O. BLAKE)<br><br>* abstract *<br><br>-- | 1 |
| A | GB - A - 1 177 932 (WADE PNEUMA-TIC LTD.)<br><br>* claims 1,3,4 *<br><br>-- | 1,3,4 |
| A | GB - A - 1 103 118 (W. DOUGLASS) | |
| A | FR - A - 2 446 973 (AEROQUIP A.G.) | |
| A | US - A - 4 093 000 (J.S. POFF) | |
| A | GB - A - 1 186 300 (G.W. SEULEN) | |
| A | US - A - 3 719 203 (INTERNATIONAL STANDARD ELECTRIC CORP.) | |
| A | HYDRAULIC PNEUMATIC POWER, volume 13, no. 148, April 1967 J.R. FAWCETT "Pneumatic and the reed switch", pages 187 to 190<br><br>------------ | |

**CLASSIFICATION OF THE APPLICATION (Int. Cl. 3)**

F 16 K 37/00
H 01 H 36/00

**TECHNICAL FIELDS SEARCHED (Int.Cl. 3)**

F 16 K 37/00
          17/00
H 01 H 36/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons
&: member of the same patent family, corresponding document

The present search report has been drawn up for all claims

| Place of search | Date of completion of the search | Examiner |
|---|---|---|
| The Hague | 11-02-1982 | DE SMET |

EPO Form 1503.1   06.78